(19) Europäisches Patentamt
European Patent Office
Office européen des brevets

(11) **EP 4 684 904 A1**

(12) **EUROPEAN PATENT APPLICATION**

(43) Date of publication:
28.01.2026 Bulletin 2026/05

(21) Application number: 25197440.8

(22) Date of filing: 06.03.2020

(51) International Patent Classification (IPC):
*B23K 26/322* (2014.01)    *B23K 26/323* (2014.01)
*B23K 26/32* (2014.01)    *B23K 26/348* (2014.01)
*B23K 9/173* (2006.01)    *B23K 26/12* (2014.01)
*B23K 103/16* (2006.01)    *B23K 103/04* (2006.01)

(52) Cooperative Patent Classification (CPC):
B23K 26/123; B23K 9/173; B23K 26/322;
B23K 26/323; B23K 2103/04; B23K 2103/166

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.03.2019 CN 201910248709
24.06.2019 CN 201910548368

(62) Document number(s) of the earlier application(s) in
accordance with Art. 76 EPC:
20783970.5 / 3 812 079

(71) Applicant: BAOSHAN IRON & STEEL CO., LTD.
Shanghai 201900 (CN)

(72) Inventors:
• **PAN, Hua**
**Shanghai, 201900 (CN)**
• **LIU, Chengjie**
**Shanghai, 201900 (CN)**
• **LEI, Ming**
**Shanghai, 201900 (CN)**
• **WU, Yue**
**Shanghai, 201900 (CN)**
• **SUN, Zhongqu**
**Shanghai, 201900 (CN)**
• **JIANG, Haomin**
**Shanghai, 201900 (CN)**

(74) Representative: **Kuhnen & Wacker**
**Patent- und Rechtsanwaltsbüro PartG mbB**
**Prinz-Ludwig-Straße 40A**
**85354 Freising (DE)**

Remarks:
This application was filed on 21-08-2025 as a divisional application to the application mentioned under INID code 62.

(54) **METHOD FOR MANUFACTURING EQUAL-STRENGTH STEEL THIN-WALL WELDING COMPONENT WITH ALUMINUM OR ALUMINUM-ALLOY PLATING**

(57)     Disclosed is a method for manufacturing an equal-strength steel thin-wall welding component with an aluminum or aluminum-alloy plating. A steel plate to be welded comprises a base body and at least one plating on a surface of the base body; the plating comprises an intermetallic compound alloy layer in contact with the base body and a metal alloy layer on the intermetallic compound alloy layer; the plating is not removed or thinned before or during welding; and by presetting a welding gap and using a carbon-manganese-steel welding wire, a welding process and protective gas for welding, the tensile strength of a welding seam of the welding component after hot stamping processing is greater than the tensile strength of a base metal, and the elongation of a welded joint is greater than 4%, such that application requirements of the equal-strength welding component in the field of hot stamping are met. Further disclosed are a welding wire for welding and an equal-strength steel thin-wall welding component with an aluminum or aluminum-alloy plating.

Fig. 1

## Description

### Technical Field

The present disclosure relates to a method for manufacturing a welded component, in particular to a method for manufacturing an equal-strength steel thin-wall welded component with an aluminum or aluminum alloy clad layer.

### Background Art

Lightweight and high-strength automotive steel plates have become a target pursued by the automotive industry in recent years. In addition, the energy-saving and emission-reducing policy is strongly implemented across the nation. As a result, there is an increasing demand for high-strength thinned automotive plates in the automotive industry. Compared with the cold stamping technology, the hot stamping technology has the advantages of obvious weight reduction, good formability, and high dimensional precision, and thus plays an important role in imparting high strength to automotive steel plates. As consumers' requirements for safety, reliability and comfortness of automobiles increase, many automotive enterprises seek to enhance product quality by improving design of automobile structures, modifying and utilizing novel manufacturing processes. Tailor welded blanks are obtained by welding two or more steel plates having different materials, different thicknesses or different coatings to meet different requirements of components for material properties. The laser tailor-welded blank hot stamping process can reduce vehicle body weight, improve assembly accuracy and simplify assembly process. At the same time, it can also take the advantages of hot stamping to further improve the formability of steel plates.

Hot stamped products produced by laser tailor welding are characterized by high strength, complex shape, good formability, high dimensional precision, and small rebound resilience. Steel plates for hot stamping may be classified into bare steel plates and plated steel plates according to surface state. In a practical hot stamping process, the surface of bare steel is prone to oxidation at high temperatures to form oxide scale. In the course of stamping, the oxide scale is pressed into the steel to form surface defects which greatly affect its performance in use. Compared with bare plates, hot-stamped plated steel plates avoid oxidation of the steel plates, and need no shot blasting after the hot stamping. Therefore, the hot-stamped plated steel plates have attracted more and more attention. At present, hot-stamped steel with an aluminum or aluminum alloy clad layer is commonly used. With respect to the welding of a steel plate with a clad layer such as an aluminum or aluminum alloy clad layer, one process involves removal of the clad layer. Chinese Patent Publication No. CN101426612A discloses a process for manufacturing a welded blank from a steel plate with an aluminum-silicon clad layer, wherein the welded blank only comprises a pre-coating of an intermetallic compound. Another process involves direct welding in the presence of a clad layer. The problem with this process is that, in the process of welding a steel plate with an aluminum or aluminum alloy clad layer, the clad layer melts into a molten pool under the influence of welding heat, forming brittle and rigid intermetallic compounds ($Fe_3Al$, $Fe_2Al_5$, $FeAl_3$). The intermetallic compounds aggregate into band or block distribution, resulting in notable decrease in the strength and ductility of the welded joint.

### Summary

One object of the present disclosure is to provide a method for manufacturing an equal-strength steel thin-wall welded component with an aluminum or aluminum alloy clad layer. This method can solve a problem of an existing equal-strength steel thin-wall welded component with an aluminum or aluminum alloy clad layer, namely the performance of a welding joint becoming poor after thermal forming of the welding joint, because the method guarantees the tensile strength, elongation and corrosion resistance of the welding joint after hot stamping. After the hot stamping, the welding joint has a tensile strength greater than the tensile strength of the base material (a steel plate to be welded), and an elongation of greater than 4%, so that the application requirements of a tailor welded blank in the field of hot stamping are satisfied.

To achieve the above object, the technical solution of the present disclosure is as follows:

A method for manufacturing an equal-strength steel thin-wall welded component with an aluminum or aluminum alloy clad layer, comprising the following steps:

1) Preparation before steel plate welding

Taking a straight steel plate to be used as a steel plate to be welded, wherein the steel plate to be welded comprises a substrate and at least one clad layer on a surface thereof, wherein the clad layer comprises an intermetallic compound alloy layer in contact with the substrate and a metal alloy layer thereon, wherein the clad layer in a to-be-welded zone of the steel plate to be welded is not removed or thinned;

2) Presetting butt gap

Presetting a butt gap between two steel plates to be welded at 0.2 -0.5 mm;

3) Welding

Conducting welding by a laser filler wire welding process, a laser composite filler wire welding process or a gas shielded welding process (such as a gas metal arc welding process) to obtain a final equal-strength steel thin-wall welded component with an aluminum or aluminum alloy clad layer, wherein a welding joint (welding line) of the equal-strength welded component has a tensile strength greater than a tensile strength of the substrate after hot stamping, wherein the laser filler wire welding process uses a laser spot having a diameter of from 0.8 to 2.0 mm (e.g., from 1.2 to 2.0 mm), a defocus distance of from -10 to 10 mm (e.g., from 0 to 10 mm), a laser power controlled at from 4 to 6 kW, a welding speed controlled at from 40 to 140 mm/s (e.g., from 40mm/s to 120mm/s), a welding wire having a diameter of from 0.8 to 1.4 mm, and a wire feeding speed of from 2 to 8m/min (e.g., from 2m/min to 6m/min).

Preferably, in step 1), prior to the welding, the steel plate to be welded is subjected to surface cleaning to ensure that the steel plate is straight, clean, and free of oil and water.

Preferably, during the welding in step 3), the shielding gas is one containing an active gas, wherein the active gas has a volume percentage of from 5% to 100%. Preferably, the active gas is carbon dioxide. Preferably, the shielding gas is carbon dioxide or a mixture of carbon dioxide and argon. Preferably, carbon dioxide in the mixture has a volume percentage of from 5 to 80%, such as 5 to 50% or 10 to 80%. Preferably, in the present disclosure, the shielding gas has a flow rate of from 5 to 30 L/min, such as from 10 to 20 L/min.

Preferably, the laser composite filler wire welding process uses a laser spot having a diameter of from 0.4 to 1.2 mm (e.g., from 0.4 to 0.8 mm), a defocus distance of from -10 to 10 mm (e.g., from 0 to 10 mm), a laser power controlled at from 1 to 5 kW (e.g., from 1 to 3 kW), a welding speed controlled at from 40 to 140 mm/s (e.g., from 40 mm/s to 120mm/s); a welding wire having a diameter of from 0.8 to 1.4 mm, a wire feeding speed of from 2 to 8 m/min (e.g., from 4 m/min to 6 m/min), a welding current of from 80 to 100 A, and a voltage of from 18 to 25 V.

Preferably, the gas shielded welding process uses a welding current of from 110 to 130 A, a welding voltage of from 18 to 25 V, a welding speed of from 300 to 800 mm/min (e.g., 400-600 mm/min), and a welding wire having a diameter of from 0.8 to 1.4 mm.

Preferably, the substrate of the steel plate to be welded has a composition based on weight percentage of C: 0.08-0.8%, Si: 0.05-1.0%, Mn: 0.1-5%, P<0.3%, S<0.1%, Al<0.3%, Ti<0.5%, B: 0.0005-0.1 %, Cr: 0.01-3%, and a balance of Fe and other unavoidable impurities.

Preferably, the substrate of the steel plate to be welded has a composition based on weight percentage of C: 0.1-0.6%, Si: 0.07-0.7%, Mn: 0.3-4%, P<0.2%, S<0.08%, Al<0.2%, Ti<0.4%, B: 0.0005-0.08%, Cr: 0.01-2%, and a balance of Fe and other unavoidable impurities.

Preferably, the substrate of the steel plate to be welded has a composition based on weight percentage of C: 0.15-0.5%, Si: 0.1-0.5%, Mn: 0.5-0.3%, P<0.1%, S<0.05%, Al<0.1%, Ti$\leq$0.2%, B: 0.0005-0.08%, Cr: 0.01-1%, and a balance of Fe and other unavoidable impurities.

Preferably, the substrate of the steel plate to be welded comprises Al: 0.01-0.09%, more preferably 0.04-0.09%; Ti: 0.01-0.2%, more preferably 0.05-0.2%; B: 0.001-0.02%, more preferably 0.002- 0.008%; Cr: 0.1-1%, more preferably 0.15-0.8%.

Preferably, the substrate of the steel plate to be welded has a thickness of from 0.5 mm to 3 mm.

Preferably, the clad layer of the steel plate to be welded is pure aluminum or aluminum alloy, wherein the aluminum alloy has a composition based on weight percentage of Si: 5-11%, Fe: 0-4%, and a balance of Al and other unavoidable impurities.

Preferably, the welding wire used for the welding in step 3) has a composition based on weight percentage of C 0.05-0.16%, Si 0.2-0.5%, Mn 1.5-2.8%, P<0.03%, S<0.005%, Al<0.06%, Ni 1.5 -3%, Cr 0.05-0.2%, Mo 0.1-0.7%, and a balance Fe and other unavoidable impurities. Preferably, the welding wire comprises 0.02%$\leq$Al<0.06%.

In some embodiments of the present disclosure, the present disclosure provides a method for manufacturing an equal-strength steel thin-wall welded component with an aluminum or aluminum alloy clad layer, characterized in that the method comprises the following steps:

1) Preparation before steel plate welding
prior to welding, a steel plate to be welded is subjected to surface cleaning to ensure that the steel plate is straight, clean, and free of oil and water;
2) Presetting butt gap for welding
Keeping a butt gap between two steel plates to be edge welded at 0.2 mm-0.5 mm;
3) Welding process

Using a laser filler wire welding process or a gas shielded welding process, wherein a laser spot diameter is from 1.2 to 2.0 mm; a defocus distance is from 0 to 10mm; a laser power is controlled in a range of from 4 kW to 6kW; a welding speed is controlled in a range of from 40 mm/s to 120 mm/s; a welding wire diameter is from 0.8 mm to 1.4 mm; a wire feeding speed is from 2 m/min to 6 m/min; and a shielding gas is a mixture of argon and carbon dioxide.

Preferably, the shielding gas is a mixture of argon + carbon dioxide, wherein carbon dioxide has a volume percentage of from 5% to 50%.

In some embodiments of the present disclosure, the present disclosure also provides an equal-strength steel thin-wall welded component with an aluminum or aluminum alloy clad layer manufactured by the method for manufacturing an equal-strength steel thin-wall welded component with an aluminum or aluminum alloy clad layer according to any embodiment of the present disclosure.

In some embodiments of the present disclosure, the present disclosure also provides an equal-strength steel thin-wall welded component with an aluminum or aluminum alloy clad layer, characterized in that the equal-strength component comprises a steel plate comprising a substrate and at least one clad layer on a surface thereof, wherein the clad layer comprises an intermetallic compound alloy layer in contact with the substrate and a metal alloy layer thereon, wherein the substrate has a composition based weight percentage of C: 0.08-0.8%, Si: 0.05-1.0%, Mn: 0.1-5%, P<0.3%, S<0.1%, Al<0.3%, Ti<0.5%, B: 0.0005-0.1%, Cr: 0.01-3%, and a balance of Fe and unavoidable impurities. Preferably, the substrate has a composition based on weight percentage of C: 0.1-0.6%, Si: 0.07-0.7%, Mn: 0.3-4%, P<0.2%, S<0.08%, Al<0.2%, Ti<0.4%, B: 0.0005-0.08%, Cr: 0.01-2%, and a balance of Fe and unavoidable impurities. More preferably, the substrate has a composition based on weight percentage of C: 0.15-0.5%, Si: 0.1-0.5%, Mn: 0.5-3%, P<0.1%, S<0.05%, Al<0.1%, Ti<0.2%, B: 0.0005-0.08%, Cr: 0.01-1%, and a balance of Fe and unavoidable impurities. Preferably, the substrate of the steel plate to be welded comprises Al: 0.01-0.09%, more preferably 0.04-0.09%; Ti: 0.01-0.2%, more preferably 0.05-0.2%; B: 0.001-0.02%, more preferably 0.002- 0.008%; Cr: 0.1-1%, more preferably 0.15-0.8%.

Preferably, the clad layer of the equal-strength steel thin-wall welded component with an aluminum or aluminum alloy clad layer is pure aluminum or aluminum alloy, wherein the aluminum alloy has a composition based on weight percentage of Si: 5-11%, Fe: 0-4%, and a balance of Al.

Preferably, the substrate of the equal-strength steel thin-wall welded component with an aluminum or aluminum alloy clad layer has a thickness of from 0.5 mm to 3 mm.

Preferably, the welding wire used between the steel plates of the equal-strength component has a composition based on weight percentage of C 0.05-0.16%, Si 0.2-0.5%, Mn 1.5-2.8%, P<0.03%, S<0.005%, Al<0.06%, Ni 1.5-3%, Cr 0.05-0.2%, Mo 0.1-0.7%, and a balance Fe and other unavoidable impurities.

Preferably, the welding line of the equal-strength steel thin-wall welded component according to any embodiment of the present disclosure has a tensile strength of not less than 1300 MPa, more preferably not less than 1400 MPa, more preferably not less than 1450 MPa. Preferably, the tensile strength is not higher than 1700MPa. The welding joint has an elongation of greater than 4%. If the welding joint is fractured under a tensile load, the fracture occurs in the substrate. More preferably, the tensile strength of the welding line is higher than the tensile strength of the substrate. Preferably, the welding joint of the equal-strength steel thin-wall welded component according to any embodiment of the present disclosure has a hardness of ≥400 HV, more preferably ≥430 HV.

A welding wire is used in the welding according to the method for manufacturing an equal-strength steel thin-wall welded component with an aluminum or aluminum alloy clad layer, wherein the welding wire has a composition based on weight percentage of C 0.05-0.16%, Si 0.2-0.5%, Mn 1.5 -2.8%, P≤0.03%, S≤0.005%, Al<0.06%, Ni 1.5-3%, Cr 0.05-0.2%, Mo 0.1-0.7%, and a balance of Fe and other unavoidable impurities. Preferably, the welding wire has a diameter of from 0.8 to 1.4 mm. Preferably, the composition of the welding wire comprises 0.02%≤Al<0.06%.

In the compositional design of the welding wire according to the present disclosure:
Silicon is a deoxygenating element in the welding wire. It can prevent iron from combining with oxygen, and reduce iron oxide in a molten pool. However, if silicon is used alone for deoxygenation, due to the high melting point (about 1710 °C) and small particle size of the resulting silicon dioxide, it's difficult for silicon dioxide particles to float and be removed from the molten pool, which leads to easy entrapment of slag in the welding line. Therefore, the weight percentage of silicon in the welding wire according to the present disclosure is controlled within the range of 0.2-0.5%, preferably within the range of 0.2-0.45%, more preferably in the range of 0.3-0.5%.

Manganese is an important hardenability element, having a great influence on the toughness of the welding line. It is also a deoxygenating element, but its deoxygenating ability is slightly lower than that of silicon. If manganese is used alone for deoxygenation, it's difficult for the resulting manganese oxide to float and be removed from the molten pool due to its high density. Therefore, silicon and manganese are used in combination in the welding wire for deoxygenation according to the present disclosure, so that the deoxygenation product is a composite silicate salt ($MnO \cdot SiO_2$) which has a lower melting point (about 1270°C) and a lower density and can aggregate into large molten slag in the molten pool. Hence, its floating is favored, and good deoxygenating effect can be achieved. In addition, manganese also has a function of desulfurization. It combines with sulfur to produce manganese sulfide, which can reduce the propensity of sulfur to cause thermal cracking. With various factors taken into consideration, the weight percentage of manganese in the welding wire according to the present disclosure is controlled between 1.5-2.8%, preferably 1.5-2.4%, more preferably 1.5-2.2%.

Sulfur tends to form iron sulfide in the molten pool, and iron sulfide is distributed in the grain boundary like a network. Thus, the toughness of the welding line is reduced notably. Therefore, sulfur in the welding wire is harmful, and its content must be strictly controlled. Generally, the S content is controlled at S≤0.005%.

The strengthening effect of phosphorus in steel is second only to carbon. Phosphorus increases the strength and hardness of the steel. Phosphorus can also improve the corrosion resistance of the steel, but the plasticity and toughness are reduced remarkably, especially at low temperatures. Hence, phosphorus is harmful in the welding wire, and its content must be strictly controlled. Generally, the phosphorus content is controlled at P≤0.03%, preferably ≤0.02%.

On the one hand, nickel can strongly increase the strength of steel, and on the other hand, it always keeps the toughness of iron at a very high level, thereby lowering the embrittlement temperature of the steel. The lattice constant of nickel is similar to that of austenite, leading to formation of a continuous solid solution, thereby reducing the critical Ms point, increasing the stability of austenite, and improving the hardenability of the welding zone. Therefore, the weight percentage of nickel in the welding wire according to the present disclosure is controlled at 1.5-3%, preferably 1.8-3%.

Chromium can increase the strength and hardness of steel without decreasing the plasticity and toughness obviously. Chromium can increase the hardenability of the steel and has a secondary hardening effect, which can increase the hardness and wear resistance of carbon steel without embrittling the steel. Chromium can expand the $\gamma$ phase region, improve the hardenability and thermal strength, reduce the temperature window in which the $\delta$ phase exists at high temperatures, promote the $\delta \rightarrow \gamma$ phase transition, and inhibit precipitation of high temperature $\delta$ ferrite. Therefore, the weight percentage of chromium in the welding wire according to the present disclosure is controlled within 0.05-0.2%, preferably 0.1-0.2%.

Molybdenum in the welding wire can increase the strength and hardness of steel, refine the grains, and improve the high temperature strength, creep strength and fatigue strength. When the molybdenum content is equal to or less than 0.7%, the plasticity can be improved, and the cracking tendency can be reduced. Molybdenum can also expand the $\gamma$ phase region, improve the hardenability and thermal strength, reduce the temperature window in which the $\delta$ phase exists at high temperatures, promote the $\delta \rightarrow \gamma$ phase transition, and inhibit precipitation of high temperature $\delta$ ferrite. Therefore, the weight percentage of molybdenum in the welding wire according to the present disclosure is controlled between 0.1-0.7%, preferably between 0.3-0.7%, and more preferably 0.4-0.7%.

In the welding wire according to the present disclosure, the C content is preferably 0.05-0.14%, more preferably 0.07-0.14%.

In a preferred embodiment, the welding wire used for the welding in the method for manufacturing the equal-strength steel thin-wall welded component with an aluminum or aluminum alloy clad layer according to the present disclosure has a composition based on weight percentage of C 0.05-0.14%, Si 0.3-0.5%, Mn 1.5-2.4%, P<0.02%, S<0.005%, Al<0.06%, Ni 1.5-3%, Cr 0.05-0.2%, Mo 0.3-0.7%, and a balance Fe and other unavoidable impurities. More preferably, the welding wire has a composition based on weight percentage of C 0.07-0.14%, Si 0.3-0.5%, Mn 1.5-2.2%, P<0.02%, S<0.005%, Al<0.06%, Ni 1.8-3%, Cr 0.1-0.2%, Mo 0.4-0.7%, and a balance of Fe and other unavoidable impurities. Preferably, 0.02%≤Al<0.06%.

When welding a plated plate having a preset welding gap, a welding wire comprising Mo, Cr, Ni and other elements according to the present disclosure is delivered to the tailor welding area to suppress the formation of high temperature $\delta$ ferrite. Molybdenum and chromium elements can expand the $\gamma$ phase region, improve the hardenability and thermal strength, reduce the temperature window in which the $\delta$ phase region exists at high temperatures, promote the $\delta \rightarrow \gamma$ phase transition, and inhibit precipitation of high temperature $\delta$ ferrite. The lattice constant of nickel is similar to that of austenite, leading to formation of a continuous solid solution, thereby reducing the critical Ms point, increasing the stability of austenite, and improving the hardenability of the welding zone.

In addition, the coexistence of Mo, Cr, and Ni can further improve the fatigue performance of the welding joint, realize the high martensite conversion in the welding line structure, and improve the mechanical properties of the welding joint.

The carbon equivalent formula recommended by the International Institute of Welding is as follows:

$$CE = C + Mn/6 + (Cr+Mo+V)/5 + (Ni+Cu)/15\,(\%)$$

According to the above formula, the filling of the welding wire will slightly increase the carbon equivalent of the welding joint, thereby ensuring the hardenability of the joint. In addition, the filling of the welding wire will further dilute the composition of the clad layer in the welding line, and chromium, molybdenum, nickel and other elements in the welding wire increase the stability of austenite and improve the hardenability of the welding line, thereby helping to prevent formation of iron-aluminum intermetallic compounds and granular ferrite phase in the welding line during hot stamping, so that the welding line of the equal-strength steel thin-wall welded component has a tensile strength greater than that of the base material.

In the method for manufacturing equal-strength steel thin-wall welding component with an aluminum or aluminum alloy clad layer:

1. The steel plate to be welded according to the present disclosure is provided with a clad layer on at least one surface of the substrate, wherein the clad layer comprises an intermetallic compound alloy layer in contact with the substrate and a metal alloy layer thereon. In particular, according to the present disclosure, the clad layer in the to-be-welded zone of the component to be welded is not removed or thinned before the welding or during the welding.

2. The shielding gas for the welding is one comprising an active gas. The active gas enhances the activity of the shielding gas in the welding zone, which is beneficial to increase the penetration rate of the plate and the fluidity of the molten metal, improve the uniformity of the molten pool metal composition, and avoid segregation of aluminum element, thereby ensuring that the performances of the joint meet the requirements of the automotive industry.

3. Before the welding, it's ensured that the surface of the steel plate to be welded is clean. The thickness of the substrate is 0.5 mm-3 mm, and a gap of 0.2 mm-0.5 mm is preset for the splicing portion. A welding device is used to tailor weld the steel plate with the clad layer. The clad layer enters the molten pool under the welding heat, and is vigorous agitated during the welding to facilitate homogenization of the composition.

In addition, by controlling the wire feeding speed at 2-8 m/min, the composition of the deposited metal (the welding line metal formed after the welding wire is melted) in the welding line is changed, so that the concentration of aluminum element in the welding line is less than 10%. At the same time, chromium, molybdenum, nickel and other elements in the welding wire increase the stability of austenite and improve the hardenability of the welding line, thereby avoiding formation of iron-aluminum intermetallic compounds and granular ferrite phase in the welding line during hot stamping, thus realizing control over the structure and size of the welding line phase.

4. The heat treatment of the equal-strength steel thin-wall welded component according to the present disclosure provides a microstructure that is a martensite structure. However, due to the presence of the aluminum-containing clad layer, the aluminum clad layer will melt and enter the welding line during the welding, which seriously affects the phase transition process of the welding line during the hot stamping, such that the granular ferrite remains to room temperature, significantly deteriorating the mechanical properties of the welding joint. Therefore, the quality of the welding joint depends on the proportion of the martensite structure in the welding line structure and the morphology of ferrite. For this reason, it is necessary to reduce precipitation of ferrite in the welding line structure, especially to avoid the formation of granular ferrite.

The formation of high temperature $\delta$ ferrite is suppressed by using a welding wire comprising Mo, Cr, Ni and other elements according to the present disclosure. Mo and Cr are elements that expand the $\gamma$ phase region and improve hardenability and thermal strength. They reduce the temperature window in which the $\delta$ phase region exists at high temperatures, promote the $\delta \rightarrow \gamma$ phase transition, and inhibit the precipitation of high-temperature $\delta$ ferrite. The lattice constant of Ni is similar to that of austenite, leading to formation of a continuous solid solution, thereby reducing the critical Ms point, increasing the stability of austenite, and improving the hardenability of the welding zone.

5. The present disclosure eliminates the need to remove or thin the clad layer of a component to be welded before welding and/or during the welding as required in the prior art. Hence, there is no need to arrange a clad layer pretreatment line, thereby saving equipment investment.

In addition, no matter what method is used to remove or thin the clad layer in the prior art, the production speed will be slowed. With the use of the clad layer pretreatment process according to the present disclosure, the production efficiency can be increased by at least 20%.

The direct welding according to the filler wire welding method of the present disclosure, without removing or thinning the clad layer of the component to be welded, guarantees the tensile strength, elongation and corrosion resistance of the welding joint after hot stamping. After the hot stamping, the tensile strength of the welding joint is greater than that of the base material, and the elongation is greater than 4%, satisfying the application requirements of the automotive industry.

**Description of the Drawings**

Fig. 1 is a curve graph showing the tensile performance of a welding joint after hot stamping in Example 1 according to the present disclosure.

Fig. 2 is an image showing the cracking position of the tensile sample of a welding joint after hot stamping in Example 1 according to the present disclosure.

Fig. 3 is a metallographic diagram of a welding joint after hot stamping in Example 1 according to the present disclosure.

Fig. 4 shows the hardness distribution of a welding joint after hot stamping in Example 1 according to the present disclosure.

**Detailed Description**

The disclosure will be further illustrated with reference to the following Examples and accompanying drawings.

Example 1

A hot formed steel plate to be welded was subjected to surface cleaning to remove contaminants such as oil and water stains from the surface to guarantee cleanliness of the surface.

The 1.75mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a spot diameter of 1.8 mm, a welding power of 4.5 kW, a welding speed of 80 mm/s, a preset butt gap of 0.3 mm, a defocus distance of 8 mm, a wire feeding speed of 3 m/min, a welding wire diameter of 1.2mm, a shielding gas of 90% argon + 10% carbon dioxide gas, and a gas flow of 15 L/min were used.

After the welding, metallographic examination was conducted on the cross-section of the welding line. The macromorphology of the welding line was excellent, and there was no obvious spatter.

After the welding, the tailor welded blank was subjected to hot stamping and quenching, wherein the heating temperature was 945 °C, the heating time was 4 minutes, and the blank was pressurized in a water-passing mold for 10 seconds.

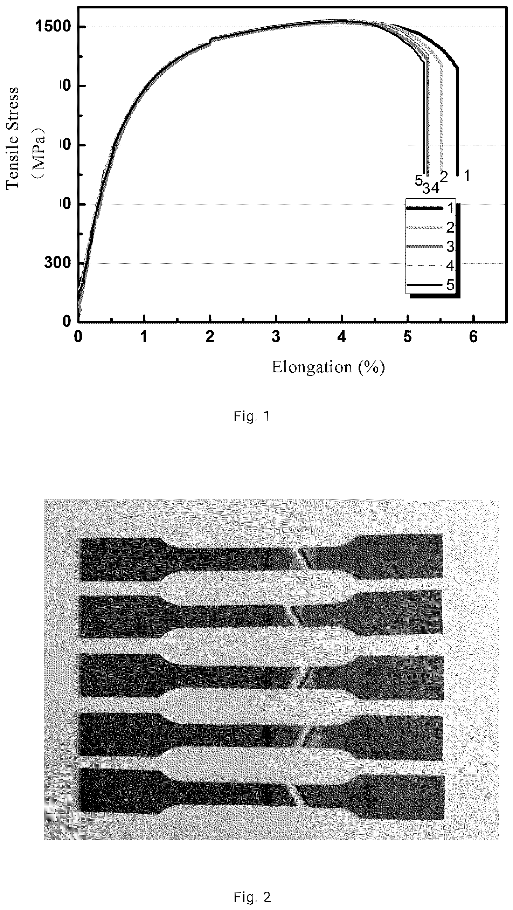

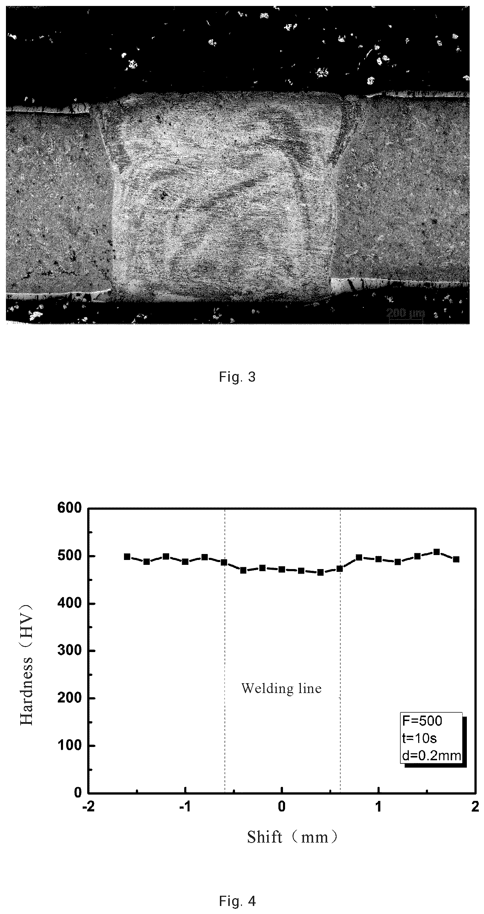

After the above-mentioned thermal cycle, the tailor welded blank was first completely austenitized. During the heating, atoms diffused between the clad layer and the steel, so that the original clad layer completely transformed into an intermetallic compound layer having a thickness larger than the thickness of the original clad layer. In addition, this layer had the characteristics of high melting point and high hardness, which prevented oxidation and decarburization of the substrate during the heating stage and the pressurizing stage. During the pressurizing stage in the mold, martensitic transformation occurred in the tailor welded blank. Then, evaluation was conducted on the performances of the welding joint according to Table 3. See Fig. 1 for the tensile curve of the welding joint, Fig. 2 for the fracture position, Fig. 3 for the metallographic image of the joint (no granular ferrite was observed in the welding line structure), and Fig. 4 for the hardness of the joint. See Table 3 for the performances of the tailor welded blank after the hot stamping.

Example 2

A hot formed steel plate to be welded was subjected to surface cleaning to remove contaminants such as oil and water stains from the surface to guarantee cleanliness of the surface.

The 1.8 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a spot diameter of 2.0 mm, a welding power of 6 kW, a welding speed of 80 mm/s, a preset butt gap of 0.5 mm, a defocus distance of 10 mm, a wire feeding speed of 4 m/min, a welding wire diameter of 1.2 mm, a shielding gas of 80% argon + +20% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 3

A hot formed steel plate to be welded was subjected to surface cleaning to remove contaminants such as oil and water stains from the surface to guarantee cleanliness of the surface.

The 1.5mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.8 mm, a welding power of 5 kW, a welding speed of 80 mm/s, a preset butt gap of 0.4mm, a defocus distance of 8 mm, a wire feeding speed of 3 m/min, a welding wire diameter of 1.2mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 4

A hot formed steel plate to be welded was subjected to surface cleaning to remove contaminants such as oil and water stains from the surface to guarantee cleanliness of the surface.

The 1.4 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.8 mm, a welding power of 5 kW, a welding speed of 80 mm/s, a preset butt gap of 0.4 mm, a defocus distance of 8 mm, a wire feeding speed of 2.5 m/min, a welding wire diameter of 1.2 mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 5

A hot formed steel plate to be welded was subjected to surface cleaning to remove contaminants such as oil and water stains from the surface to guarantee cleanliness of the surface.

The 1.2 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.8 mm, a welding power of 4.5 kW, a welding speed of 80 mm/s, a preset butt gap of 0.3 mm, a defocus distance of 8 mm, a wire feeding speed of 2 m/min, a welding wire diameter of 1.2 mm, a shielding gas of 40% argon + 60% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 6

A hot formed steel plate to be welded was subjected to surface cleaning to remove contaminants such as oil and water stains from the surface to guarantee cleanliness of the surface.

The 1.75 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.4 mm, a welding power of 5 kW, a welding speed of 80 mm/s, a preset butt gap of 0.4 mm, a defocus distance of 7 mm, a wire feeding speed of 5 m/min, a welding wire diameter of 1.0 mm, a shielding gas of 20% argon + 80% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 7

A hot formed steel plate to be welded was subjected to surface cleaning to remove contaminants such as oil and water stains from the surface to guarantee cleanliness of the surface.

The 1.8 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.4 mm, a welding power of 5 kW, a welding speed of 80 mm/s, a preset butt gap of 0.4 mm, a defocus distance of 7 mm, a wire feeding speed of 6 m/min, a welding wire diameter of 1.0 mm, a shielding gas of 100% carbon dioxide gas, and a gas flow of 15 L/min were used.

After the welding, metallographic examination was conducted on the cross-section of the welding line. The macromorphology of the welding line was excellent, and there was no obvious spatter.

After the welding, the tailor welded blank was subjected to hot stamping and quenching, wherein the heating temperature was 930°C, the heating time was 4 minutes, and the blank was pressurized in a water-passing mold for 10 seconds. See Table 3 for the performances of the tailor welded blank after the hot stamping.

Example 8

A hot formed steel plate to be welded was subjected to surface cleaning to remove contaminants such as oil and water stains from the surface to guarantee cleanliness of the surface.

The 1.5 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.4 mm, a welding power of 5 kW, a welding speed of 80 mm/s, a preset butt gap of 0.4 mm, a defocus distance of 7 mm, a wire feeding speed of 6 m/min, a welding wire diameter of 1.0 mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 7 was used for flat plate hot stamping. See Table 3 for the performances of the tailor welded blank after the hot stamping.

Example 9

A hot formed steel plate to be welded was subjected to surface cleaning to remove contaminants such as oil and water stains from the surface to guarantee cleanliness of the surface.

The 1.4 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.2 mm, a welding power of 4 kW, a welding speed of 80 mm/s, a preset butt gap of 0.4 mm, a defocus distance of 5 mm, a wire feeding speed of 6 m/min, a welding wire diameter of 1.0 mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 7 was used for flat plate hot stamping. See Table 3 for the performances of the tailor welded blank after the hot stamping.

Example 10

A hot formed steel plate to be welded was subjected to surface cleaning to remove contaminants such as oil and water stains from the surface to guarantee cleanliness of the surface.

The 1.2 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.2 mm, a welding power of 4 kW, a welding speed of 80 mm/s, a preset butt gap of 0.4 mm, a defocus distance of 5 mm, a wire feeding speed of 6 m/min, a welding wire diameter of 1.0 mm, a shielding gas of 60% argon + +40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 7 was used for flat plate hot stamping. See Table 3 for the performances of the tailor welded blank after the hot stamping.

Example 11

A hot formed steel plate to be welded was subjected to surface cleaning to remove contaminants such as oil and water stains from the surface to guarantee cleanliness of the surface.

The 1.5 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 0.6 mm, a welding power of 2 kW, a welding speed of 80 mm/s, a preset butt gap of 0.4 mm, a defocus distance of 5 mm, a wire feeding speed of 6 m/min, a welding wire diameter of 1.0 mm, a shielding gas of 60% argon + +40% carbon dioxide gas, a gas flow of 15 L/min, a welding electric current of 90 A and an electric voltage of 20 V for MAG composite tailor welding were used. After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 12

A hot formed steel plate to be welded was subjected to surface cleaning to remove contaminants such as oil and water stains from the surface to guarantee cleanliness of the surface.

The 1.2 mm steel plate having an aluminum alloy clad layer (see Table 1 for the composition of the steel plate) was subjected to gas metal arc tailor welding using the following process: a welding wire as described in the present disclosure (see Table 2 for the composition of the welding wire), a welding electric current of 120 A, a welding electric voltage of 22 V, a welding speed of 500 mm/s, a preset butt gap of 0.5 mm, a welding wire diameter of 1.0 mm, a shielding gas of 80% argon + 20% carbon dioxide gas, and a gas flow of 15 L/min were used. After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Table 1: Steel plate composition weight percentage (wt%)

| Ex. | C | Si | Mn | P | S | Al | Ti | B | Cr |
|---|---|---|---|---|---|---|---|---|---|
| 1 | 0.15 | 0.10 | 2.90 | 0.059 | 0.038 | 0.09 | 0.090 | 0.0031 | 0.15 |
| 2 | 0.25 | 0.23 | 1.19 | 0.015 | 0.001 | 0.04 | 0.030 | 0.0040 | 0.27 |
| 3 | 0.49 | 0.50 | 2.51 | 0.024 | 0.04 | 0.08 | 0.027 | 0.0052 | 0.51 |
| 4 | 0.39 | 0.36 | 3.00 | 0.044 | 0.03 | 0.07 | 0.05 | 0.0062 | 0.71 |
| 5 | 0.50 | 0.48 | 0.50 | 0.081 | 0.02 | 0.05 | 0.20 | 0.0071 | 0.20 |
| 6 | 0.15 | 0.10 | 2.90 | 0.059 | 0.038 | 0.09 | 0.090 | 0.0031 | 0.15 |
| 7 | 0.25 | 0.23 | 1.19 | 0.015 | 0.001 | 0.04 | 0.030 | 0.0040 | 0.27 |
| 8 | 0.49 | 0.50 | 2.51 | 0.024 | 0.04 | 0.08 | 0.027 | 0.0052 | 0.51 |
| 9 | 0.39 | 0.36 | 3.00 | 0.044 | 0.03 | 0.07 | 0.05 | 0.0062 | 0.71 |
| 10 | 0.50 | 0.48 | 0.50 | 0.081 | 0.02 | 0.05 | 0.20 | 0.0071 | 0.20 |
| 11 | 0.49 | 0.50 | 2.51 | 0.024 | 0.04 | 0.08 | 0.027 | 0.0052 | 0.51 |
| 12 | 0.50 | 0.48 | 0.50 | 0.081 | 0.02 | 0.05 | 0.20 | 0.0071 | 0.20 |

Table 2: Welding wire composition weight percentage (wt%)

| Ex. | C | Si | Mn | P | S | Al | Cr | Ni | Mo |
|---|---|---|---|---|---|---|---|---|---|
| 1 | 0.15 | 0.27 | 1.65 | 0.005 | 0.002 | 0.031 | 0.164 | 1.53 | 0.69 |
| 2 | 0.12 | 0.45 | 1.87 | 0.03 | 0.0018 | 0.056 | 0.105 | 2.5 | 0.34 |
| 3 | 0.10 | 0.39 | 2.1 | 0.024 | 0.0010 | 0.057 | 0.082 | 3.0 | 0.43 |
| 4 | 0.08 | 0.21 | 2.8 | 0.03 | 0.0012 | 0.045 | 0.189 | 2.36 | 0.21 |
| 5 | 0.06 | 0.42 | 1.78 | 0.0062 | 0.005 | 0.030 | 0.052 | 2.85 | 0.58 |
| 6 | 0.15 | 0.27 | 1.65 | 0.005 | 0.002 | 0.031 | 0.164 | 1.53 | 0.69 |
| 7 | 0.12 | 0.45 | 1.87 | 0.03 | 0.0018 | 0.056 | 0.105 | 2.5 | 0.34 |
| 8 | 0.10 | 0.39 | 2.1 | 0.024 | 0.0010 | 0.057 | 0.082 | 3.0 | 0.43 |
| 9 | 0.08 | 0.21 | 2.8 | 0.03 | 0.0012 | 0.045 | 0.189 | 2.36 | 0.21 |
| 10 | 0.06 | 0.42 | 1.78 | 0.0062 | 0.005 | 0.030 | 0.052 | 2.85 | 0.58 |
| 11 | 0.10 | 0.39 | 2.1 | 0.024 | 0.0010 | 0.057 | 0.082 | 3.0 | 0.43 |

(continued)

| Ex. | C | Si | Mn | P | S | Al | Cr | Ni | Mo |
|---|---|---|---|---|---|---|---|---|---|
| 12 | 0.06 | 0.42 | 1.78 | 0.0062 | 0.005 | 0.030 | 0.052 | 2.85 | 0.58 |

Table 3: Joint performances

| Ex. | Joint tensile strength (MPa)* | Joint elongation (%)* | Sample cracking position | Joint corrosion resistance** |
|---|---|---|---|---|
| 1 | 1505 | >4% | Base material | Passed |
| 2 | 1539 | >4% | Base material | Passed |
| 3 | 1496 | >4% | Base material | Passed |
| 4 | 1585 | >4% | Base material | Passed |
| 5 | 1565 | >4% | Base material | Passed |
| 6 | 1470 | >4% | Base material | Passed |
| 7 | 1515 | >4% | Base material | Passed |
| 8 | 1510 | >4% | Base material | Passed |
| 9 | 1540 | >4% | Base material | Passed |
| 10 | 1548 | >4% | Base material | Passed |
| 11 | 1526 | >4% | Base material | Passed |
| 12 | 1490 | >4% | Base material | Passed |

\* Standard tensile samples having a nominal width of 12.5mm and an original gauge length of 50mm were used to measure the tensile strength and elongation of the joints;
\*\* The corrosion resistance test was performed according to DIN50021, DIN50017, and DIN50014 standards.

**Claims**

1. An equal-strength steel thin-wall hot-stamped component with an aluminum or aluminum alloy clad layer, wherein equal-strength steel thin-wall hot-stamped component is formed by tailor welding and hot-stamping steel plates having the same strength;

   wherein the steel plates each comprise a substrate and at least one clad layer on a surface thereof, wherein the clad layer comprises an intermetallic compound alloy layer in contact with the substrate and a metal alloy layer thereon;
   wherein the substrate has a composition based on weight percentage of C: 0.08-0.8%, Si: 0.05-1.0%, Mn: 0.1-5%, P<0.3%, S<0.1%, Al<0.3%, Ti<0.5%, B: 0.0005-0.1%, Cr: 0.01-3%, and a balance of Fe and unavoidable impurities;
   wherein a welding wire for welding the steel plates has a composition based on weight percentage of C 0.05-0.16%, Si 0.2-0.5%, Mn 1.5-2.8%, P<0.03%, S<0.005%, Al<0.06%, Ni 1.5-3%, Cr 0.05-0.2%, Mo 0.1-0.7%, and a balance Fe and other unavoidable impurities; and
   wherein the microstructure of the welding line is martensite and ferrite and there is no iron-aluminum intermetallic compounds and granular ferrite phase in the welding line.

2. The equal-strength steel thin-wall hot-stamped component with an aluminum or aluminum alloy clad layer according to claim 1, wherein the substrate has a composition based on weight percentage of C: 0.1-0.6%, Si: 0.07-0.7%, Mn: 0.3-4%, P<0.2%, S<0.08%, Al<0.2%, Ti<0.4%, B: 0.0005-0.08%, Cr: 0.01-2%, and a balance of Fe and other unavoidable impurities; more preferably, the substrate has a composition based on weight percentage of C: 0.15-0.5%, Si: 0.1-0.5%, Mn: 0.5-0.3%, P<0.1%, S<0.05%, Al<0.1% , Ti≤0.2%, B: 0.0005-0.08%, Cr: 0.01-1%, and a balance of Fe and other unavoidable impurities.

3. The equal-strength steel thin-wall hot-stamped component with an aluminum or aluminum alloy clad layer according to claim 1 or 2, wherein the substrate comprises Al: 0.01-0.09%, more preferably 0.04-0.09%; Ti: 0.01-0.2%, more preferably 0.05-0.2%; B: 0.001-0.02%, more preferably 0.002- 0.008%; Cr: 0.1-1%, more preferably 0.15-0.8%.

4. The equal-strength steel thin-wall hot-stamped component with an aluminum or aluminum alloy clad layer according to claim 1, wherein the clad layer of the steel plates is pure aluminum or aluminum alloy, wherein the aluminum alloy comprises a composition based on weight percentage of Si: 5-11%, Fe: 0-4%, and a balance of Al.

5. The equal-strength steel thin-wall hot-stamped component with an aluminum or aluminum alloy clad layer according to claim 1, wherein the substrate has a thickness of from 0.5 mm to 3 mm.

6. The equal-strength steel thin-wall hot-stamped component with an aluminum or aluminum alloy clad layer according to claim 1, wherein the component has a welding line having a tensile strength of not less than 1300 MPa, preferably not less than 1400 MPa, more preferably not less than 1450 MPa; preferably, the tensile strength is not higher than 1700MPa; a welding joint having an elongation of greater than 4%; and wherein if the welding joint is fractured under a tensile load, the fracture occurs in the substrate; the tensile strength of the welding line is higher than that of the substrate.

7. The equal-strength steel thin-wall hot-stamped component with an aluminum or aluminum alloy clad layer according to claim 1, wherein the welding wire has a composition based on weight percentage of C 0.05-0.14%, Si 0.3-0.5%, Mn 1.5-2.4%, P<0.02%, S<0.005%, Al<0.06%, Ni 1.5-3%, Cr 0.05-0.2%, Mo 0.3-0.7%, and a balance Fe and other unavoidable impurities; preferably C 0.07-0.14%, Si 0.3-0.5%, Mn 1.5-2.2%, P<0.02%, S<0.005%, Al<0.06%, Ni 1.8-3%, Cr 0.1-0.2%, Mo 0.4-0.7%, and a balance Fe and other unavoidable impurities; preferably 0.02%≤Al<0.06%.

8. The equal-strength steel thin-wall hot-stamped component with an aluminum or aluminum alloy clad layer according to claim 1, wherein the welding wire has a diameter of 0.8-1.4 mm.

9. The equal-strength steel thin-wall hot-stamped component with an aluminum or aluminum alloy clad layer according to any one of claims 1-8, wherein the qual-strength steel thin-wall hot-stamped component with an aluminum or aluminum alloy clad layer is manufactured by a method comprising the following steps:

   1) Preparation before steel plate welding
   Taking a straight steel plate to be used as a steel plate to be welded, wherein the steel plate to be welded comprises a substrate and at least one clad layer on a surface thereof, wherein the clad layer comprises an intermetallic compound alloy layer in contact with the substrate and a metal alloy layer thereon, wherein the clad layer in a to-be-welded zone of the steel plate to be welded is not removed or hinned;
   2) Presetting butt gap
   Presetting a butt gap between two steel plates to be welded at 0.2 -0.5 mm;
   3) Welding
   Conducting welding by a laser filler wire welding process, a laser composite filler wire welding process or a gas metal arc welding process to obtain a final equal-strength steel thin-wall welded component with an aluminum or aluminum alloy clad layer, wherein the laser filler wire welding process uses a laser spot having a diameter of from 0.8 to 2.0 mm, a defocus distance of from -10 to 10 mm, a laser power controlled at from 4 to 6 kW, a welding speed controlled at from 40 to 140 mm/s, a welding wire having a diameter of from 0.8 to 1.4 mm, and a wire feeding speed of from 2 to 8 m/min; wherein the laser composite filler wire welding process uses a laser spot having a diameter of from 0.4 to 1.2 mm, a defocus distance of from -10 to 10 mm, a laser power controlled at from 1 to 5 kW, a welding speed controlled at from 40 to 140 mm/s, a welding wire having a diameter of from 0.8 to 1.4 mm, a wire feeding speed of from 2 to 8 m/min, a welding electric current of 80-100 A, and an electric voltage of 18-25 V; and the gas metal arc welding process uses a welding electric current of 110-130 A, and a welding electric voltage of 18-25 V, a welding speed of from 300 to 800 mm/min, and a welding wire having a diameter of from 0.8 to 1.4 mm;
   4) Hot-stamping to obtain the equal-strength steel thin-wall hot-stamped component with an aluminum or aluminum alloy clad layer.

10. The equal-strength steel thin-wall hot-stamped component with an aluminum or aluminum alloy clad layer according to claim 9, wherein during the welding in step 3), a shielding gas is one containing an active gas, wherein the active gas has a volume percentage of from 5% to 100%;

   preferably, the active gas is carbon dioxide;
   preferably, the shielding gas is carbon dioxide or a mixture of carbon dioxide and argon; preferably, carbon dioxide in the mixture has a volume percentage of from 5 to 80%, such as 5 to 50% or 10 to 80%;

preferably, the shielding gas has a flow rate of from 5 to 30 L/min, such as from 10 to 20 L/min.

11. A method for manufacturing the equal-strength steel thin-wall hot-stamped component with an aluminum or aluminum alloy clad layer according to any one of claims 1-8, wherein the method comprising the following steps:

   1) Preparation before steel plate welding
   Taking a straight steel plate to be used as a steel plate to be welded, wherein the steel plate to be welded comprises a substrate and at least one clad layer on a surface thereof, wherein the clad layer comprises an intermetallic compound alloy layer in contact with the substrate and a metal alloy layer thereon, wherein the clad layer in a to-be-welded zone of the steel plate to be welded is not removed or hinned;
   2) Presetting butt gap
   Presetting a butt gap between two steel plates to be welded at 0.2 -0.5 mm;
   3) Welding
   Conducting welding by a laser filler wire welding process, a laser composite filler wire welding process or a gas metal arc welding process to obtain a final equal-strength steel thin-wall welded component with an aluminum or aluminum alloy clad layer, wherein the laser filler wire welding process uses a laser spot having a diameter of from 0.8 to 2.0 mm, a defocus distance of from -10 to 10 mm, a laser power controlled at from 4 to 6 kW, a welding speed controlled at from 40 to 140 mm/s, a welding wire having a diameter of from 0.8 to 1.4 mm, and a wire feeding speed of from 2 to 8 m/min; wherein the laser composite filler wire welding process uses a laser spot having a diameter of from 0.4 to 1.2 mm, a defocus distance of from -10 to 10 mm, a laser power controlled at from 1 to 5 kW, a welding speed controlled at from 40 to 140 mm/s, a welding wire having a diameter of from 0.8 to 1.4 mm, a wire feeding speed of from 2 to 8 m/min, a welding electric current of 80-100 A, and an electric voltage of 18-25 V; and the gas metal arc welding process uses a welding electric current of 110-130 A, and a welding electric voltage of 18-25 V, a welding speed of from 300 to 800 mm/min, and a welding wire having a diameter of from 0.8 to 1.4 mm;
   4) Hot-stamping to obtain the equal-strength steel thin-wall hot-stamped component with an aluminum or aluminum alloy clad layer.

12. The method according to claim 11, wherein during the welding in step 3), a shielding gas is one containing an active gas, wherein the active gas has a volume percentage of from 5% to 100%;

   preferably, the active gas is carbon dioxide;
   preferably, the shielding gas is carbon dioxide or a mixture of carbon dioxide and argon; preferably, carbon dioxide in the mixture has a volume percentage of from 5 to 80%, such as 5 to 50% or 10 to 80%;
   preferably, the shielding gas has a flow rate of from 5 to 30 L/min, such as from 10 to 20 L/min.

13. The method according to claim 11, wherein a laser filler wire welding process is used in step 3), wherein a laser spot diameter is from 1.2 to 2.0 mm; a defocus distance is from 0 to 10 mm; a laser power is controlled in a range of from 4 kW to 6 kW; a welding speed is controlled in a range of from 40 mm/s to 120 mm/s; a welding wire diameter is from 0.8 mm to 1.4 mm; a wire feeding speed is from 2 m/min to 6 m/min; and a shielding gas is a mixture of argon and carbon dioxide.

14. The method according to claim 11, wherein a laser composite filler wire welding process is used in step 3), wherein a laser spot having a diameter of from 0.4 to 0.8 mm, a defocus distance of from 0 to 10 mm, a laser power controlled at from 1 to 3 kW, a welding speed controlled at from 40 mm/s to 120 mm/s, a welding wire having a diameter of from 0.8 to 1.4 mm, a wire feeding speed of from 4 m/min to 6 m/min, a welding current of from 80 to 100 A, and a voltage of from 18 to 25 V.

Fig. 1

Fig. 2

Fig. 3

Fig. 4

Europäisches
Patentamt

European
Patent Office

Office européen
des brevets

# EUROPEAN SEARCH REPORT

**Application Number**

EP 25 19 7440

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/326538 A1 (BREUER ARNDT [DE] ET AL) 15 November 2018 (2018-11-15) | 11-14 | INV.<br>B23K26/322 |
| A | * paragraphs [0010], [0014], [0015], [0018], [0019], [0024] - [0026], [0063], [0075] * | 1 | B23K26/323<br>B23K26/32<br>B23K26/348<br>B23K9/173 |
| A | WO 2010/102318 A1 (BOEHLER SCHWEISSTECHNIK [AT]; POSH GERHARD [AT] ET AL.) 16 September 2010 (2010-09-16)<br>* page 5, lines 10-15 * | 1 | B23K26/12<br>B23K103/16<br><br>ADD.<br>B23K103/04 |
| A | WO 2019/048172 A1 (WISCO TAILORED BLANKS GMBH [DE]) 14 March 2019 (2019-03-14)<br>* page 5, lines 16-22 *<br>* page 8, lines 22-29 * | 11 | |

TECHNICAL FIELDS
SEARCHED     (IPC)

B23K

The present search report has been drawn up for all claims

| Place of search | Date of completion of the search | Examiner |
|---|---|---|
| Munich | 17 December 2025 | Seiderer, Jens |

EPO FORM 1503 03.82 (P04C01)

## ANNEX TO THE EUROPEAN SEARCH REPORT
## ON EUROPEAN PATENT APPLICATION NO.

EP 25 19 7440

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | Publication date | Patent family member(s) | | Publication date |
|---|---|---|---|---|
| US 2018326538 A1 | 15-11-2018 | BR | 112018002126 A2 | 11-09-2018 |
| | | CA | 2999105 A1 | 30-03-2017 |
| | | CN | 108025400 A | 11-05-2018 |
| | | DE | 102015115915 A1 | 23-03-2017 |
| | | EP | 3352940 A1 | 01-08-2018 |
| | | ES | 2903167 T3 | 31-03-2022 |
| | | HU | E057186 T2 | 28-04-2022 |
| | | JP | 6430070 B2 | 28-11-2018 |
| | | JP | 2018534143 A | 22-11-2018 |
| | | KR | 20180033593 A | 03-04-2018 |
| | | KR | 20190026985 A | 13-03-2019 |
| | | MX | 394325 B | 24-03-2025 |
| | | PL | 3352940 T3 | 21-02-2022 |
| | | PT | 3352940 T | 19-01-2022 |
| | | RU | 2680485 C1 | 21-02-2019 |
| | | US | 2018326538 A1 | 15-11-2018 |
| | | WO | 2017050711 A1 | 30-03-2017 |
| | | ZA | 201800658 B | 26-06-2019 |
| WO 2010102318 A1 | 16-09-2010 | AT | 507914 A1 | 15-09-2010 |
| | | DE | 202009007217 U1 | 27-08-2009 |
| | | EP | 2406034 A1 | 18-01-2012 |
| | | JP | 2012519598 A | 30-08-2012 |
| | | US | 2012061354 A1 | 15-03-2012 |
| | | WO | 2010102318 A1 | 16-09-2010 |
| WO 2019048172 A1 | 14-03-2019 | CN | 111065486 A | 24-04-2020 |
| | | DE | 102017120611 A1 | 07-03-2019 |
| | | EP | 3678812 A1 | 15-07-2020 |
| | | ES | 2894761 T3 | 15-02-2022 |
| | | HU | E056802 T2 | 28-03-2022 |
| | | PL | 3678812 T3 | 20-12-2021 |
| | | PT | 3678812 T | 21-10-2021 |
| | | US | 2020189035 A1 | 18-06-2020 |
| | | WO | 2019048172 A1 | 14-03-2019 |

EPO FORM P0459

For more details about this annex : see Official Journal of the European Patent Office, No. 12/82

**REFERENCES CITED IN THE DESCRIPTION**

**Patent documents cited in the description**

- CN 101426612 A